# EUROPÄISCHE PATENTSCHRIFT

(11) **EP 3 377 357 B1**
(45) Veröffentlichungstag und Bekanntmachung des Hinweises auf die Patenterteilung: **04.09.2019**
(21) Anmeldenummer: 16808930.8
(22) Anmeldetag: 18.11.2016
(51) Int. Cl.: B60K 35/00, B60R 11/02, B60R 21/045, F16F 7/12, G06F 3/0488

(54) **ANZEIGEVORRICHTUNG FÜR EINE FAHRZEUGKOMPONENTE**
INDICATOR APPARATUS FOR A VEHICLE COMPONENT
DISPOSITIF D'AFFICHAGE POUR COMPOSANT DE VÉHICULE

(30) Priorität: 19.11.2015 DE 102015222829
(43) Veröffentlichungstag der Anmeldung: 26.09.2018
(73) Patentinhaber: Behr-Hella Thermocontrol GmbH, 70469 Stuttgart (DE)
(72) Erfinder: BESCHNITT, Alexander, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2016/078138
(87) Internationale Veröffentlichungsnummer: WO 2017/085254

(56) Entgegenhaltungen:
- WO-A1-2010/021044
- DE-C1- 19 517 782
- US-A1- 2010 250 071

## Beschreibung

Die vorliegende Patentanmeldung nimmt die Priorität der deutschen Patentanmeldung 10 2015 222 829.0 vom 19. November 2015 in Anspruch.

Die Erfindung betrifft eine Anzeigevorrichtung für eine Fahrzeugkomponente und insbesondere für ein Mensch-Maschine-Interface für die Anzeige und gegebenenfalls Eingabe von Betriebsparametern für eine Fahrzeugkomponente. Im Innenbereich von Fahrzeugen werden zunehmend Mensch-Maschine-Interface (HMI- bzw. MMI-)Bedienoberflächen, die früher aus Kunststoff oder Holz gefertigt wurden, durch beispielsweise Echtglas oder auch durch eine Kunststoffglasoptik ersetzt. Der aktuelle Trend bei HMI- bzw. MMI-Bediengeräten wie beispielsweise Klimabediengeräten ist es, funktionale Display-Baugruppen einzusetzen, die eine geschlossene Bedienoberfläche aufweisen. Derartige Display-Baugruppen können beispielsweise eine glasoptikähnliche Kunststoffabdeckung aufweisen oder mit einer transparenten Deckschicht aus Echtglas versehen sein. Auf diese Weise werden im Innenbereich von Fahrzeugen mehr und mehr die klassischen Kunststoffbedienelemente wie Tasten, Drehknöpfe o.dgl. durch Touchscreens ersetzt.

Für im Fahrzeug verbaute Glasflächen existieren spezielle Anforderungen in den ECE-Normen. So dürfen Glasflächen beispielsweise nicht splittern, wenn sie zerstört werden. Befindet sich eine Glasfläche im Innenraum eines Fahrzeugs in demjenigen Bereich, in dem ein Insasse bei einem Unfall mit seinem Kopf aufschlagen könnte, so müssen derartige Glasflächen, ohne zu splittern, ausweichen können, dürfen also eine maximale Verzögerungsbeschleunigung nicht überschreiten (ECE-Norm R21). Die Glasfläche bzw. Display-Baugruppe darf also nicht zu steif sein, da es anderenfalls zu lebensgefährlichen negativen Beschleunigungen bei einem Kopfaufschlag kommen kann.

DE-C-195 17 782 zeigt das Zusammenfassen mehrerer Funktionselemente einer Fahrzeug-Instrumententafel durch einen Rahmen, hinter dem ein Querträger (Abstützelement) der Fahrzeug-Karosserie angeordnet ist, wobei sich zwischen dem Rahmen und dem Querträger ein Energieabsorber (Verzögerungselement) befindet.

DE-A-10 2004 028 058 offenbart eine Konstruktion zum automatischen Zurückweichen eines von einer Bedieneinheit vorstehenden Bedienelements.

Ferner zeigen US-B-6 247 745 und DE-U-71 44 102 verschiedene Ausgestaltungen von als Verzögerungselemente einsetzbaren Energieabsorber.

Eine Vorrichtung mit den Merkmalen des Oberbegriffs des Anspruchs 1 ist aus US-A-2010/0250071 bekannt.

In WO-A-2010/021044 ist eine weitere Vorrichtung mit Energieabsorption im Falle eines Aufschlags bekannt.

Bisherige Display-Baugruppen sind ortsfest eingebaut und verformen sich wenig. Eine Betätigungsrückmeldung für den Bediener erfolgt meist nur akustisch.

Es existieren aber auch Display-Bedienbaugruppen mit haptischer, d.h. taktiler Rückmeldung, die neben einer gegebenenfalls akustischen Rückmeldung eine "echte" Bewegung der Displayoberfläche vollführen und somit die Bedienung spürbar für den Anwender werden lassen (Force Sense Force Feedback). Bei diesen Systemen treten Schwingungen auf, da das System federnd gelagert ist und mechanisch angeregt wird. Um haptisch besonders hochwertige Display-Baugruppen realisieren zu können, sollte das federnd gelagerte System so steif wie möglich sein und so steif wie möglich an das Fahrzeug angebunden sein.

Die beiden Anforderungen, nämlich das System zur Einhaltung der maximal zulässigen Verzögerungsbeschleunigung relativ weich aufzuhängen, es aber zum Zwecke einer hochwertigen Haptik möglichst steif an das System anbinden zu müssen, widersprechen sich somit.

Aufgabe der Erfindung ist es, eine Anzeigevorrichtung für eine Fahrzeugkomponente, insbesondere für ein Mensch-Maschine-Interface für die Anzeige und gegebenenfalls Eingabe von Betriebsparametern für eine Fahrzeugkomponente zu schaffen, wobei die Anzeigevorrichtung im Falle eines Kopfaufschlags die nach Norm maximal zulässige Verzögerungsbeschleunigung nicht überschreiten darf. Ferner sollte ein Splittern des Materials, aus dem die Display-Baugruppen Oberfläche gefertigt ist, verhindert werden.

Zur Lösung dieser Aufgabe wird mit der Erfindung eine Anzeigevorrichtung für eine Fahrzeugkomponente, insbesondere für ein Mensch-Maschine-Interface für die Anzeige und gegebenenfalls Eingabe von Betriebsparametern für eine Fahrzeugkomponente vorgeschlagen, wobei die Anzeigevorrichtung versehen ist mit
- einem Gehäuse mit einer Vorderseite,
- einer an der Vorderseite des Gehäuses angeordneten und/oder die Vorderseite des Gehäuses bildenden Displayeinheit zur Anzeige von Betriebsparametern einer Fahrzeugkomponente und gegebenenfalls von Symbolfeldern zur Eingabe von Befehlen und Betriebsparametern für eine Fahrzeugkomponente und
- einem in dem Gehäuse hinter der Displayeinheit angeordneten, verformbaren Verzögerungs(-crash-)element zur Verzögerung von auf die Displayeinheit einwirkenden Beschleunigungsbewegungen in Richtung auf das Innere des Gehäuses infolge des Aufschlagens eines Objekts auf die Displayeinheit,
- wobei das Verzögerungselement in einem mit dem Bereich des Zentrums der Displayeinheit fluchtenden Mittenbereich eine größere Steifigkeit aufweist als in einem Bereich des Verzögerungselements, der mit einem Bereich der Displayeinheit fluchtet, welcher an den Bereich des Zentrums der Displayeinheit angrenzt und sich in Richtung auf den Rand der Displayeinheit und/oder bis zu dessen Rand erstreckt.

Mit der Erfindung wird also sinngemäß vorgeschlagen, in eine Display-Baugruppe ein Verzögerungselement einzubringen, das sich im Kopfaufschlagsfall gezielt plastisch verformt. In denjenigen Bereichen der Anzeigevorrichtung (Display-Baugruppen), in denen im Kopfaufschlagsfall eine maximale Durchbiegung zu erwarten ist, was im Regelfall im Mittenbereich der Displayeinheit der Fall sein dürfte, weist das Verzögerungselement eine höhere Festigkeit bzw. Steifigkeit auf als in seinen übrigen Bereichen. So kann beispielsweise die Festigkeit bzw. Steifigkeit des Verzögerungselements zu dessen Rand hin abnehmen. Ganz grundsätzlich sei gesagt, dass die Zonen maximaler bzw. größerer und geringerer Festigkeit bzw. Steifigkeit von der Lage der z.B. in Abhängigkeit vom Einbauort zu erwartenden Impact-Zonen der Displayeinheit abhängig sein können.

Die variable Steifigkeit bzw. Flexibilität des Verzögerungselements kann durch gezielte Geometrie in das Element eingebracht sein (beispielsweise durch unterschiedliche Dicken, durch Aussparungen oder Veränderung anderer geometrischer Parameter bzw. Abmessungen.

Auch kann die lokal unterschiedliche Steifigkeit und Flexibilität des Verzögerungselements durch lokal unterschiedlich große Dicken des Verzögerungselements und/oder durch lokal unterschiedliche Geometrien wie z.B. lokal unterschiedliche Wabenstrukturen und/oder lokal unterschiedliche Perforationen, Perforationsdichten o.dgl. Materialschwächungen oder -verstärkungen und/oder durch andere Maßnahmen zur lokal unterschiedlichen Steifigkeits- und Flexibilitätseinstellung gebildet sein.

Schließlich kann die lokal verschiedene Steifigkeit/Flexibilität/Festigkeit des Verzögerungselements auch durch die Wahl verschiedener Materialien oder durch spezielles Materialverhalten (beispielsweise Wärmebehandlung) oder durch ein visko-elastisches Material realisiert sein, das bei hohen Dehnungsgeschwindigkeiten steifer reagiert als bei niedrigeren Dehnungsgeschwindigkeiten.

Das erfindungsgemäß vorgesehene Verzögerungselement ist hinter der Displayeinheit innerhalb des Gehäuses der Bedien- und/oder Anzeigevorrichtung angeordnet und kann zur energieabsorbierenden Anbindung/Kopplung der Displayeinheit an das bzw. mit dem Fahrzeug dienen. Handelt es sich um eine Displayeinheit mit Force Feedback, so wird die elastische Lagerung der Displayeinheit durch das Verzögerungselement nicht beeinträchtigt. Der Vorteil des Einsatzes des erfindungsgemäß vorgesehenen Verzögerungselements in einer Display-Baugruppe ist insbesondere darin zu sehen, dass die Force Feedback Anbindung der Displayeinheit an das Fahrzeug so steif wie möglich ausgelegt sein kann (was wiederum vorteilhaft für die Haptik ist, da eine weiche Anbindung Schwingungen des Systems zulässt, die sich wiederum in einer schlechten Haptik auswirken), wohingegen im Kopfaufschlagsfall das Verzögerungselement seine Funktion erfüllt und der größte Teil der Energie durch Verformung des Verzögerungselements "abgefangen" wird. Die Verzögerungsbeschleunigung kann entsprechend über das Verzögerungselement angepasst werden.

Der Vorteil der Erfindung ist unter anderem, dass der Bauraum für Funktions-, Anzeige- und/oder Bediengeräte innerhalb des Fahrzeugs nicht beeinträchtigt ist, d.h. verringert ist, da keine Abstützung dieser Geräte über den Energieabsorber in Form des Verzögerungselements an Zusatzbauteilen des Fahrzeugs, wie z.B. an der Karosserie anzuordnenden Trägern, Streben etc. Querträger erforderlich ist.

Wie bereits oben erwähnt, lässt sich die lokal unterschiedliche Steifigkeit/ Festigkeit bzw. Flexibilität des Verzögerungselements durch lokal unterschiedlich große Dicken des Verzögerungselements realisieren. Alternativ oder zusätzlich dazu kann vorgesehen sein, dass die lokal unterschiedliche Steifigkeit/Festigkeit bzw. Flexibilität des Verzögerungselements durch die Wahl unterschiedlich starrer oder flexibler Materialien und/oder durch in Abhängigkeit von der Dehnungs- oder Stauchungsgeschwindigkeit unterschiedlich steif oder flexibel reagierender Materialien, aus denen das Verzögerungselement gefertigt ist, gebildet ist.

In weiterer vorteilhafter Ausgestaltung der Erfindung kann ferner vorgesehen sein, dass das Verzögerungselement plattenförmig mit oder ohne Durchbrüche ausgebildet ist oder aber in Form von gegebenenfalls untereinander verbundenen Stegen ausgebildet ist.

Wie bereits oben dargelegt, weist die Anzeigevorrichtung nach der Erfindung zweckmäßigerweise ein Gehäuse auf, das der Verbindung der Displayeinheit mit dem Fahrzeug dient. An bzw. in dem Gehäuse ist das Verzögerungselement beispielsweise im Bereich seines Randes angebunden bzw. stützt sich dort ab.

In einer vorteilhaften Ausgestaltung der Erfindung ist die Displayeinheit in Draufsicht betrachtet rechteckig ausgebildet und weist einen rechteckigen Zentrumsbereich, einem rechteckig verlaufenden Randbereich und mindestens einem zwischen dem Zentrumsbereich und dem Randbereich angeordneten rechteckig verlaufenden Zwischenbereich auf. Die Dicke des Verzögerungselements in dessen Zentrumsbereich kann dabei größer sein als diejenige in dem mindestens einen Zwischenbereich. Ferner kann die Dicke des mindestens einen Zwischenbereichs größer sein als die Dicke des Randbereichs des Verzögerungselements. Alternativ bzw. zusätzlich kann das Material des Verzögerungselements im Zentrumsbereich steifer sein als dasjenige in dem mindestens einen Zwischenbereich, während das Material des mindestens einen Zwischenbereichs steifer ist als dasjenige des Randbereichs.

Die Erfindung lässt sich insbesondere mit Vorteil bei einer Bedieneinheit einsetzen, wie sie in der deutschen Patentanmeldung 10 2016 101 556.3 vom 28. Januar 2016 beschrieben ist.

Die Erfindung wird nachfolgend anhand eines Ausführungsbeispiels sowie unter Bezugnahme auf die Zeichnung näher erläutert. Im Einzelnen zeigen dabei:
- Fig. 1: einen Querschnitt durch eine Display-Baugruppe mit Force Feedback nach dem Stand der Technik,
- Fig. 2: die Display-Baugruppe gemäß Fig. 1 bei simuliertem Kopfaufschlagstest,
- Fig. 3: eine schematische Darstellung der beispielsweise Glas-Bedienoberfläche der Display-Baugruppe mit angedeuteter maximaler Durchbiegung im Mittenbereich,
- Fig. 4: einen Querschnitt durch eine Display-Baugruppe mit hinter der Displayeinheit angeordnetem Verzögerungselement nach der Erfindung und
- Fig. 5: eine Draufsicht auf das Verzögerungselement in Höhe der Linie V-V der Fig. 4.

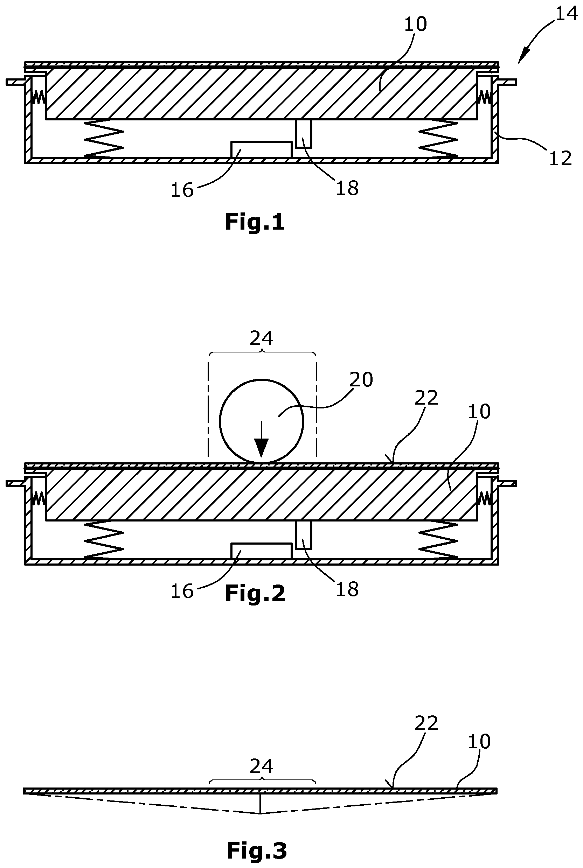

In den Fign. 1 bis 3 ist schematisch dargestellt, wie nach dem Stand der Technik eine Anzeigevorrichtung für eine Fahrzeugkomponente mit Force Feedback im Falle eines Kopfaufschlagstests reagiert. Eine Displayeinheit 10 ist dabei in einem Gehäuse 12 elastisch gelagert angeordnet. Wird die Displayeinheit 10, die an der Vorderseite 14 des Gehäuses 12 angeordnet ist, betätigt, wird die entsprechende Bewegung sensiert, um bei Erkennung einer Mindestbewegung eine haptische Rückmeldung in Form von Force Feedback zu geben. Die entsprechende Sensorik und Bewegungseinheit ist in den Figuren bei 16,18 angedeutet.

Trifft nun für den Kopfaufschlagstest ein Testkörper 20 auf die Bedien- bzw. Anzeigeoberfläche 22 der Displayeinheit 10 auf, so ist deren Durchbiegung beispielsweise im Zentrumsbereich 24 am größten (siehe schematisch angedeutet in Fig. 3).

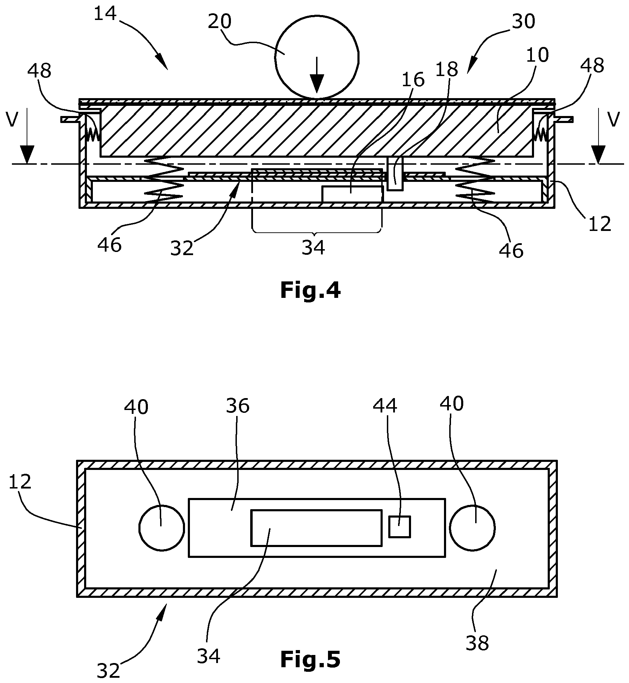

In den Fign. 4 und 5 ist eine erfindungsgemäß ausgestaltete Anzeigevorrichtung 30 gezeigt. Sofern die Elemente der Anzeigevorrichtung 30 denjenigen der Anzeigevorrichtung gemäß den Fign. 1 bis 3 entsprechen, sind sie in den Fign. 4 und 5 mit den gleichen Bezugszeichen wie in den Fign. 1 bis 3 gekennzeichnet.

Erfindungsgemäß befindet sich hinter der Displayeinheit 10 innerhalb des Gehäuses 12 der Anzeigevorrichtung 30 als Energieabsorber ein Verzögerungs(-crash-)element 32, das in diesem Ausführungsbeispiel seine größte Steifigkeit im Zentrumsbereich 24 der Displayeinheit 10 aufweist und zum Rand hin weniger fest bzw. steif ist.

Das Verzögerungselement 32 weist beispielsweise im mit dem Zentrumsbereich 24 der Displayeinheit 10 fluchtenden Mittenbereich 34 eine größere Dicke auf als in einem diesen Mittenbereich 34 umgebenden Zwischenbereich 36, um dann in seinem den Zwischenbereich 36 umgebenden Randbereich 38 eine gegenüber dem Zwischenbereich 36 geringere Dicke aufzuweisen. Damit lässt sich die Steifigkeit/Festigkeit/Flexibilität des Verzögerungselements 32 lokal unterschiedlich einstellen. In dem in diesem Ausführungsbeispiel plattenförmigen Verzögerungselement 32 können Durchbrüche 40,44 ausgebildet sein, um Funktionselemente mechanischer oder elektrischer Art hindurchführen zu können. Im Ausführungsbeispiel dienen die Durchbrüche 40,44 z.B. der Aufnahme von Federn 46 für beispielsweise eine Force Sense Funktion. Gegebenenfalls erforderliche zusätzliche Federn für eine Force Feedback Funktion sind nicht gezeigt. Die Federn 46 und 48 sollen die elastische Lagerung der Displayeinheit 10 lediglich symbolisieren und können demnach auch an anderer Stelle angeordnet und in beliebiger Form ausgebildet sein.

Andere "Verteilungen" lokal unterschiedlicher Festigkeiten/Steifigkeiten/Flexibilitäten des Verzögerungselements 32 als diejenige, die in den Fign. 4 und 5 gezeigt ist, sind erfindungsgemäß möglich. Die konkret zu wählende Verteilung hängt von den zu erwartenden Aufschlagzonen einer Anzeigevorrichtung in einem Fahrzeug ab.

### BEZUGSZEICHENLISTE

- 10: Displayeinheit
- 12: Gehäuse
- 14: Vorderseite
- 16: Sensorik/Aktuator
- 18: Sensorik/Aktuator
- 20: Testkörper
- 22: Anzeigeoberfläche
- 24: Zentrumsbereich der Anzeigeoberfläche
- 30: Anzeigevorrichtung
- 32: Verzögerungselement
- 34: Mittenbereich des Verzögerungselements
- 36: Zwischenbereich des Verzögerungselements
- 38: Randbereich des Verzögerungselements
- 40: Durchbruch im Verzögerungselement
- 44: Durchbruch im Verzögerungselement
- 46: Federn für Force Sense
- 48: Federn für Force-Feedback

## Patentansprüche

1. Anzeigevorrichtung für eine Fahrzeugkomponente, insbesondere für ein Mensch-Maschine-Interface für die Anzeige und gegebenenfalls Eingabe von Betriebsparametern für eine Fahrzeugkomponente, mit
- einem Gehäuse (12) mit einer Vorderseite,
- einer an der Vorderseite des Gehäuses (12) angeordneten und/oder die Vorderseite des Gehäuses (12) bildenden Displayeinheit (10) zur Anzeige von Betriebsparametern einer Fahrzeugkomponente und gegebenenfalls von Symbolfeldern zur Eingabe von Befehlen und Betriebsparametern für eine Fahrzeugkomponente und
- einem in dem Gehäuse (12) hinter der Displayeinheit (10) angeordneten, verformbaren Verzögerungselement (32) zur Verzögerung von auf die Displayeinheit (10) einwirkenden Beschleunigungsbewegungen in Richtung auf das Innere des Gehäuses (12) infolge des Aufschlagens eines Objekts auf die Displayeinheit (10),
**dadurch gekennzeichnet,**
- **dass** das Verzögerungselement (32) in einem mit dem Bereich des Zentrums der Displayeinheit (10) fluchtenden Mittenbereich (34) eine größere Steifigkeit aufweist als in einem Bereich des Verzögerungselements (32), der mit einem Bereich der Displayeinheit (10) fluchtet, welcher an den Bereich des Zentrums der Displayeinheit (10) angrenzt und sich in Richtung auf den Rand der Displayeinheit (10) und/oder bis zu dessen Rand erstreckt.

2. Anzeigevorrichtung (30) nach Anspruch 1, **dadurch gekennzeichnet, dass** die lokal unterschiedliche Steifigkeit und Flexibilität des Verzögerungselements (32) durch lokal unterschiedlich große Dicken des Verzögerungselements (32) und/oder durch lokal unterschiedliche Geometrien wie z.B. lokal unterschiedliche Wabenstrukturen und/oder lokal unterschiedliche Perforationen, Perforationsdichten o.dgl. Materialschwächungen oder -verstärkungen und/oder durch andere Maßnahmen zur lokal unterschiedlichen Steifigkeits- und Flexibilitätseinstellung gebildet ist.

3. Anzeigevorrichtung (30) nach Anspruch 1, **dadurch gekennzeichnet, dass** die lokal unterschiedliche Steifigkeit und Flexibilität des Verzögerungselements (32) durch die Wahl unterschiedlich starrer oder flexibler Materialien und/oder durch in Abhängigkeit von der Dehnungs- oder Stauchungsgeschwindigkeit unterschiedlich steif oder flexibel reagierender Materialien, aus denen das Verzögerungselement (32) gefertigt ist, gebildet ist.

4. Anzeigevorrichtung (30) nach einem der Ansprüche 1 bis 3, **dadurch gekennzeichnet, dass** das Verzögerungselement (32) plattenförmig mit oder ohne Durchbrüche (40,44) oder in Form von gegebenenfalls untereinander verbundenen Stegen ausgebildet ist.

5. Anzeigevorrichtung (30) nach einem der Ansprüche 1 bis 4, **dadurch gekennzeichnet, dass** die Displayeinheit (10) in Draufsicht betrachtet rechteckig ist und einen rechteckigen Mittenbereich (34), einen rechteckig verlaufenden Randbereich (38) und mindestens einen zwischen dem Mittenbereich (34) und dem Randbereich (38) angeordneten, rechteckig verlaufenden Zwischenbereich (36) aufweist, dass die Dicke des Verzögerungselements (32) im Mittenbereich (34), größer ist als diejenige in dem mindestens einen Zwischenbereich (36) und die Dicke des mindestens einen Zwischenbereichs (36) größer ist als diejenige des Randbereichs (38) oder dass das Material des Verzögerungselements (32) im Mittenbereich (34) steifer ist als dasjenige in dem mindestens einen Zwischenbereich (36) und das Material des mindestens einen Zwischenbereich (36) steifer ist als dasjenige des Randbereichs (38).

6. Anzeigevorrichtung (30) nach einem der Ansprüche 1 bis 5, **dadurch gekennzeichnet, dass** das Verzögerungselement (32) im Bereich seines Randes an und/oder in dem Gehäuse (12) mit diesem verbunden und/oder an diesem abgestützt ist.

## Claims

1. An indicator device for a vehicle component, in particular for a human-machine interface for displaying and, where necessary, for entering operating parameters for a vehicle component, comprising
- a housing (12) comprising a front side,
- a display unit (10), which is arranged on the front side of the housing (12) and/or forms the front side of the housing (12), for displaying operating parameters of a vehicle component and possibly symbols fields for entering commands and operating parameters for a vehicle component, and
- a deformable delay element (32), arranged in the housing (12) behind the display unit (10), for delaying acceleration movements that act on the display unit (10) in the direction of the interior of the housing (12) as a result of an object striking the display unit (10),
**characterized in that**
- the delay element (32) has a greater stiffness in a center region (34) that is in alignment with the region of the center of the display unit (10) than in a region of the delay element (32) that is in alignment with a region of the display unit (10) that adjoins the region of the center of the display unit (10) and extends in the direction of the edge of the display unit (10) and/or as far as the edge thereof.

2. The indicator device (30) according to claim 1, **characterized in that** the locally different stiffness and flexibility of the delay element (32) may be formed by locally different thicknesses of the delay element (32) and/or by locally different geometries, such as e.g. locally different honeycomb structures and/or locally different perforations, perforation densities, or the like, material weakenings or reinforcements, and/or using other measures for adjusting local stiffness and flexibility.

3. The indicator device (30) according to claim 1, **characterized in that** the locally different stiffness and flexibility of the delay element (32) may be formed by selecting materials of different stiffness or flexibility and/or selecting materials that react with greater stiffness or flexibility depending on the rate of strain or rate of compression, from which materials the delay element (32) is fabricated.

4. The indicator device (30) according to any of claims 1 bis 3, **characterized in that** the delay element (32) is embodied plate-shaped, with or without through-holes (40, 44), or possibly in the form of bars joined to one another.

5. The indicator device (30) according to any of claims 1 bis 4, **characterized in that** the display unit (10) is embodied as a rectangle, when viewed from plan view, and has a rectangular center region (34), a rectangular edge region (38), and at least one rectangular intermediate region (36) running between the center region (34) and the edge region (38), **in that** the thickness of the delay element (32) in the center region (34) is greater than that in the at least one intermediate region (36), and the thickness of the at least one intermediate region (36) is greater than that of the edge region (38), or **in that** the material of the delay element (32) in the center region (34) is stiffer than that in the at least one intermediate region (36), and the material of the at least one intermediate region (36) is stiffer than that of the edge region (38).

6. The indicator device (30) according to any of claims 1 bis 5, **characterized in that** the delay element (32), in the region of its edge at and/or in the housing (12), is connected thereto and/or supported thereon.

## Revendications

1. Dispositif indicateur pour un composant de véhicule, en particulier pour une interface homme-machine pour l'indication et éventuellement la saisie de paramètres de fonctionnement pour un composant de véhicule, doté
- d'un boîtier (12) doté d'une face avant,
- d'une unité d'affichage (10) agencée sur la face avant du boîtier (12) et/ou formant la face avant du boîtier (12) pour l'indication de paramètres de fonctionnement d'un composant de véhicule et éventuellement de champs de symboles pour la saisie d'ordres et de paramètres de fonctionnement pour un composant de véhicule et
- d'un élément ralentisseur déformable (32) agencé dans le boîtier (12) derrière l'unité d'affichage (10) pour ralentir des mouvements d'accélération opérant sur l'unité d'affichage (10) dans la direction de l'intérieur du boîtier (12) à la suite de la frappe d'un objet sur l'unité d'affichage (10),
**caractérisé en ce que**
- l'élément ralentisseur (32) présente dans une zone centrale (34) alignée à la zone du milieu de l'unité d'affichage (10) une rigidité plus élevée que dans une zone de l'élément ralentisseur (32) alignée à une zone de l'unité d'affichage (10) jouxtant la zone du milieu de l'unité d'affichage (10) et s'étendant dans la direction du bord de l'unité d'affichage (10) et/ou jusqu'à ce bord.

2. Dispositif indicateur (30) selon la revendication 1, **caractérisé en ce que** la rigidité et la flexibilité localement différentes de l'élément ralentisseur (32) sont formées par des épaisseurs localement différentes de l'élément ralentisseur (32) et/ou par des géométries localement différentes comme par exemple des structures alvéolées localement différentes et/ou des perforations, densités de perforation ou des affaiblissements ou renforcements de matériau similaires localement différents et/ou par d'autres mesures pour un réglage localement différent de la rigidité et de la flexibilité.

3. Dispositif indicateur (30) selon la revendication 1, **caractérisé en ce que** la rigidité et la flexibilité localement différentes de l'élément ralentisseur (32) sont formées par le choix de matériaux de raideur ou de flexibilité différentes et/ou par des matériaux réagissant se rigidifiant ou s'assouplissant différemment en fonction de la vitesse d'étirement ou de tassement avec lesquels l'élément ralentisseur (32) est fabriqué.

4. Dispositif indicateur (30) selon l'une des revendications 1 à 3, **caractérisé en ce que** l'élément ralentisseur (32) est réalisé en forme de plaque avec ou sans percées (40, 44) ou en forme de traverses éventuellement reliées les unes aux autres.

5. Dispositif indicateur (30) selon l'une des revendications 1 à 4, **caractérisé en ce que** l'unité d'affichage (10) est rectangulaire en vue en plan et comporte une zone centrale (34) rectangulaire, une zone périphérique (38) décrivant un rectangle et au moins une zone intermédiaire (36) décrivant un rectangle et agencée entre la zone centrale (34) et la zone périphérique (38), **en ce que** l'épaisseur de l'élément ralentisseur (32) dans la zone centrale (34) est supérieure à l'épaisseur de celui-ci dans l'au moins une zone intermédiaire (36) et l'épaisseur de l'au moins une zone intermédiaire (36) est supérieure à celle de la zone périphérique (38) ou **en ce que** le matériau de l'élément ralentisseur (32) dans la zone centrale (34) est plus rigide que celui de la zone intermédiaire (36) et le matériau de l'au moins une zone intermédiaire (36) est plus rigide que celui de la zone périphérique (38).

6. Dispositif indicateur (30) selon l'une des revendications 1 à 5, **caractérisé en ce que** l'élément ralentisseur (32) est rattaché à et/ou dans le boîtier (12) et/ou s'appuie sur celui-ci dans la zone de son bord.
